# EUROPEAN PATENT SPECIFICATION

(11) **EP 1 981 253 B1**
(45) Date of publication and mention of the grant of the patent: **22.06.2011**
(21) Application number: 07105908.3
(22) Date of filing: 10.04.2007
(51) Int. Cl.: H04M 1/60, H04R 25/00, H04M 1/247, H04M 1/725

(54) **A user interface for a communications device**
Benutzeroberfläche für ein Kommunikationsgerät
Interface utilisateur pour un dispositif de communications

(43) Date of publication of application: 15.10.2008
(73) Proprietor: Oticon A/S, 2765 Smørum (DK)
(72) Inventor: Bergmann, Martin, DK-2765 Smoerum (DK); Rasmussen, Crilles Bak, DK-2765 Smoerum (DK); Littau, Bo, DK-2765 Smoerum (DK)
(74) Representative: Nielsen, Hans Jörgen Vind

(56) References cited:
- EP-A1- 1 460 769
- WO-A-2004/098238
- WO-A-2005/107319
- WO-A-2006/023857

## Description

### TECHNICAL FIELD

The invention relates to a communications device for wireless communication with another device. An embodiment of the invention relates to a user interface for a body worn communications device for forwarding to a listening device one or more audio signals selected from a number of audio input sources, possibly including that of a mobile telephone. The invention further relates to a system, a method and use.

The invention may e.g. be useful in applications such as hearing aids, ear phones, head sets, etc.

### BACKGROUND ART

The following account of the prior art relates to one of the areas of application of the present invention, the control of the forwarding of audio signals to a hearing aid.

Hearing aid systems demand increasing ability to communicate with accessories such as mobile phones, MP3 players, etc. Various gateway devices capable of converting these types of data in accordance with a standard or proprietary protocol has been proposed, cf. e.g. EP 1 480 492 A2 or EP 1 460 769 A1 or WO 2006/117365 A1.

WO 2006/023857 A1 deals with a system including a hearing assistance device sized for fitting a human ear, and adapted to communicate with a wireless transceiver. The wireless transceiver enables the hearing assistance device to communicate with other wireless devices, for instance, a cellular telephone, by disabling redundant speakers and microphone, and by transmitting voice data.

EP 1 460 769 A1 deals with a mobile transceiver comprising several receivers for receiving electrical or electromagnetic signals carrying audio signal and a radio transmitter for transmitting radio signals carrying audio signals. The mobile transceiver makes it possible to received several audio signals separately from different audio sources, to prioritise automatically the received audio signals, and to select automatically and transmit one of the several received audio signals to the user, thereby assisting the possibly hearing impaired user in differentiating audio signals from different audio sources.

WO 2005/107319 A1 deals with a programmable, power-efficient, hearing aid and cell phone-compatible system for selectively filtering continuous mechanical noise.

### DISCLOSURE OF INVENTION

Providing a good, easy-to-use user interface for a relatively complex audio gateway supporting multiple wireless and wired connections as well as mobile phone calls can be a difficult task.

The object of the present invention is to provide a relatively simple user interface between an audio selection device and a head-worn listening device, such as a hearing aid.

Objects of the invention are achieved by the invention described in the accompanying claims and as described in the following.

In the present context, the terms 'hearing instrument' and 'hearing aid' are used interchangeably for a body worn listening device comprising adaptation (e.g. amplification) of an acoustical input (typically customized to the wearers hearing profile). In the present context, a hearing aid/hearing instrument may be of any appropriate kind, such as an in-the-ear (ITE), completely-in-canal (CIC), behind-the-ear (BTE), or a receiver-in-the-ear (RITE) hearing aid.

### A communications device:

An object of the invention is achieved by a body worn communications device for communicating with a head-worn listening device as defined in claim 1.

The 'state of the user interface' is understood to include events related to a particular functional push-button, e.g. an incoming phone call, an available audio source, etc. It is further understood to include indications of the status, e.g. activeness or non-activeness of the function indicated by a given push-button (e.g. phone call active or not, other audio source active or not, wireless connection active or not)

Advantageously, the communications device is adapted to provide that the commands activated by said push-buttons are defined in dependence of a push-time parameter and/or of the simultaneous activation of two or more push-buttons, and wherein a given push-button activation combination generates a mixture of audio-visual cues to indicate to a user which command is thereby activated.

In an embodiment, the communications device is adapted to accept an audio signal from a mobile telephone by activating a 'phone' push-button on the communications device. This has the advantage that no manipulation of the listening device or the mobile telephone is necessary. The user interface provides a 'one click' acceptance (or rejection of an incoming call from a (predefined) mobile telephone).

In an embodiment, the user interface is adapted to provide audio-visual cues to communicate its state to the user.

Advantageously, the communications device is adapted to provide that the commands activated by said push-buttons are defined in dependence of a push-time parameter and/or of the simultaneous activation of two or more push-buttons, and wherein a given push-button activation combination generates a mixture of audio-visual cues to indicate to a user which command is thereby activated.

Among the advantages for a user are:
- Clear visual feedback by using simple button light indications
- *Operation* and *indication* are tied together in the buttons.
- The combination of audio and visual indications.

A communications device according to an embodiment of the invention enables wireless digital audio to be forwarded to a listening device, such as a hearing aid or a pair of hearing aids without operating the hearing aid(s), i.e. the communications device - in this respect - working as a remote control of the hearing aid(s).

The term 'push-button' is in the present context taken to mean any activator for transforming a human input to an electrical signal (command). A push-button in the present context can thus e.g. be a key of a key pad, a touch sensitive area of a panel, such as a touch screen, etc.

In an embodiment, two or more colours are used for visual button indication, such as three or more, such as four or more colours. In an embodiment, the colours red, green yellow and blue are used for indicating different events or functions. This is an easy to understand way of indicating different meanings of a particular button.

In an embodiment, the communications device is adapted to indicate events relating to said received audio signals to a user by a *mixture* of audio-visual cues, at least partially via one or more of said push-buttons. A mixture of audio and visual indicators is an efficient way of illustrating to a user a number of different meanings of a relatively small number or push-buttons.

In an embodiment, the push-time parameter comprises at least two different time ranges, short, long, such as three different time ranges, short, long, very long, each having a different meaning when translated to a corresponding command. The use of a push-time parameter provides an efficient way of enhancing the number of possible commands by a relatively small number of input keys (push-buttons).

In an embodiment, the *visual* cues for a given button are selected from the group comprising a symbol on the button, button rim lights, back light, different colour light, constant light, no light, blinking light at a first blinking frequency, blinking light at a second blinking frequency, and combinations thereof.

The term 'rim light' is in the present context taken to mean a light that surrounds a central area, where the illumination along the rim can be controlled independently of the (optional) light or illumination of the central area.

The term 'back light' is in the present context taken to mean the illumination of the key pad (or push-button), typically comprising a symbol indicating the function or relation of the key pad (or push-button). In an embodiment, the back light illuminates the symbol (or the background of the symbol, thereby providing its 'negative').

In an embodiment, the *audio* cues for a given button and/or event are selected from the group comprising ring-tones, clicks, single beep-sounds, a relatively short beep, a relatively long beep, a number of repeated beep-sounds at a first repeat frequency, a number of repeated beep-sounds at a second repeat frequency, one or more recorded voice messages, and combinations thereof.

In an embodiment, the status of the communications device is communicated visually with lights, while the status of the listening device is communicated with audio signals played in the listening device. In an embodiment, the audio signals played in the listening device are stored in a memory in the listening device and/or can be activated via commands forwarded to the listening device from the communications device. Alternatively, the audio signals can also be stored in the communications device and forwarded to the listening device.

In an embodiment, the communications device comprises a 'phone' button for initiating commands and displaying events relating to the audio signal from a telephone and an 'audio' button for initiating commands and displaying events relating to another audio signal. This has the effect that the state of the user interface is indicated at the same place where the state can be changed as embodied by the button in question.

In an embodiment of the invention, the interface comprises a phone button (for accepting an incoming telephone call), an audio button (for selecting on of a multitude of audio signals (other than that from a telephone)) and a volume button (for regulating the volume of the audio signal streamed to the listening device). The state of the user interface is indicated at the same place where the state can be changed.

In an embodiment, the communications device further comprises a microphone for recording a user's voice input. Such a microphone is e.g. for use in case the selected audio signal is from a telephone. In an embodiment, the communications device further comprises a volume control button for regulating the volume of the audio signal presented to the listening device. In an embodiment, the communications device comprises a wireless audio input, e.g. according to the BlueTooth standard or another standard for digital wireless communication. In an embodiment, the communications device comprises a wireless communications button, e.g. a BlueTooth button. In an embodiment, the communications device further comprises a wired audio input, such as a jack connector or a USB-connector. In an embodiment, the communications device further comprises a connector for charging the battery of the communications device and/or for updating the firmware of the communications device, e.g. a USB-connector. In an embodiment, the communications device comprises four push buttons, a phone button, an audio button, a volume button and a wireless connection button. In an embodiment, the communications device further comprises a battery status indicator. In an embodiment, the connector for charging the battery is located near the battery status indicator, e.g. within 5 cm from each other, such as within 2 cm of each other (measured boundary to boundary).

In an embodiment, the communications device can be handheld and the push-buttons of the communications device are arranged so that they can all be manipulated by a thumb of a normal human hand substantially without mowing the grip on the device. In an embodiment, the push-buttons of the communications device are arranged on the same side of a housing of the communications device. In an embodiment, the push-buttons of the communications device are arranged on the same side of a housing of the communications device within 7 cm of each other (e.g. so that the largest distance of a geometrical curve enclosing the outer boundaries of the push-buttons is smaller than or equal to 7 cm), such as within 6 cm, such as within 5 cm, such as within 4 cm, such as within 3 cm.

In an embodiment, the communications device is adapted to communicate with other devices according to a variety of Bluetooth profiles, e.g. according to one or more (such as all) of the Bluetooth Headset (HS) profile, the Bluetooth Handsfree (HF) profile and the Bluetooth Stereo profile.

According to the invention, the communications device is adapted to provide one or more tactile cues to indicate commands, status or events in the communications device or in said listening device.

In an embodiment, the communications device comprises a display. In an embodiment, the display is adapted to be a 'touch screen' display, thereby including the functionality of one ore more push-buttons. In an embodiment, the display is used to present visual cues, e.g. symbols and/or alphanumeric messages related to the state of the communications device and/or of the listening device.

In an embodiment, the communications device is adapted to work as a remote control of the listening device. In an embodiment, the communications device is adapted to be able to change settings of the listening device, e.g. to change a parameter of a hearing aid program to adapt the hearing aid program to the current listening situation of its wearer.

In an embodiment, the communications device is located at least partially in the housing of another device, e.g. a remote control device of the listening device or a mobile telephone (cf. e.g. US 2007/0009123).

### A hearing aid system:

In an aspect, a hearing aid system is further provided, the system comprising a communications device described above, in the detailed description and in the claims a listening device wherein the listening device and the communications device are is adapted to communicate wirelessly with each other.

In an embodiment, the listening device and the communications device are adapted to communicate inductively with each other.

The communication between the listening device and the communications device can be arranged according to any appropriate standard or format, proprietary or public. In a preferred embodiment, the communication between the listening device and the communications device is arranged according to a communications standard codec, such as G.722 (CCITT G.722 Wideband Speech Coding Standard, the CCITT G.722 wideband speech coding algorithm supporting bit rates of 64, 56 and 48 kbps). Alternatively, other standards could be used, e.g. codecs intended for music, such as MP3 (MPEG Audio Layer 3), AAC (Advanced Audio Coding), etc.

In an embodiment, the audio sampling rate is larger than 16 kHz, such as 20 kHz or larger.

In an embodiment, the hearing aid system is adapted to allow the listening device to differentiate in the processing of the audio signals received from the communications device, such as between low- and high-bandwidth signals (e.g. phone and music).

In an embodiment, the system is adapted to exchange status information between the communications device and the listening device and wherein an audio identification field is included.

In an embodiment, the listening device comprises a hearing aid or a pair of hearing aids, a head set or a pair of head phones.

Other features, which can be derived from the corresponding device as described above, in the detailed description and in the claims are intended to be combined with the system, where appropriate.

### A method of indicating to a user:

In a further aspect, as defined in claim 23, a method of indicating to a user the commands activated by push-buttons of a body worn communications device for communicating with a head-worn listening device is provided.

In an embodiment, a mixture of audio-visual cues are used wherein the commands and status of the *communications device* are communicated *visually* with lights in or around said push-buttons, while the status of the listening device is communicated with audio signals played in the listening device.

In an embodiment, a push-time parameter is used to define parameters activated by a given push-button, the push-time parameter comprising at least two different time ranges, short, long, such as three different time ranges, short, long, very long, each having a different meaning when translated to a corresponding command.

In an embodiment, the *visual* cues for a given button and/or status indicator are selected from the group comprising a symbol on the button, button rim lights, back light, different colour light, constant light, no light, blinking light at a first blinking frequency, blinking light at a second blinking frequency, and combinations thereof.

In an embodiment, the *audio* cues for a given button and/or event are selected from the group comprising ring-tones, clicks, single beep-sounds, a relatively short beep, a relatively long beep, a number of repeated beep-sounds at a first repeat frequency, a number of repeated beep-sounds at a second repeat frequency, and combinations thereof.

According to the invention, indications of commands or status in the communications device or in the listening device are provided by one or more tactile cues, possibly in combination with audio and/or visual cues. In an embodiment, such tactile indications are provided in the communications device. In an embodiment, such tactile indications are provided in the listening device, or in both. An advantage thereof is that it increases the possibility to indicate relatively many pieces of information with a relatively limited number of buttons and/or indicators.

Other features, which can be derived from the corresponding device and system as described above, in the detailed description and in the claims are intended to be combined with the method, where appropriate.

### Use of a communications device or a hearing aid system:

In a further aspect, use of a communications device or of a hearing aid system as described above, in the detailed description or in the claims is provided.

Further objects of the invention are achieved by the embodiments defined in the dependent claims and in the detailed description of the invention.

As used herein, the singular forms "a," "an," and "the" are intended to include the plural forms as well, unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements maybe present. Furthermore, "connected" or "coupled" as used herein may include wirelessly connected or coupled. As used herein, the term "and/or" includes any and all combinations of one or more of the associated listed items.

### BRIEF DESCRIPTION OF DRAWINGS

The invention will be explained more fully below in connection with a preferred embodiment and with reference to the drawings in which:

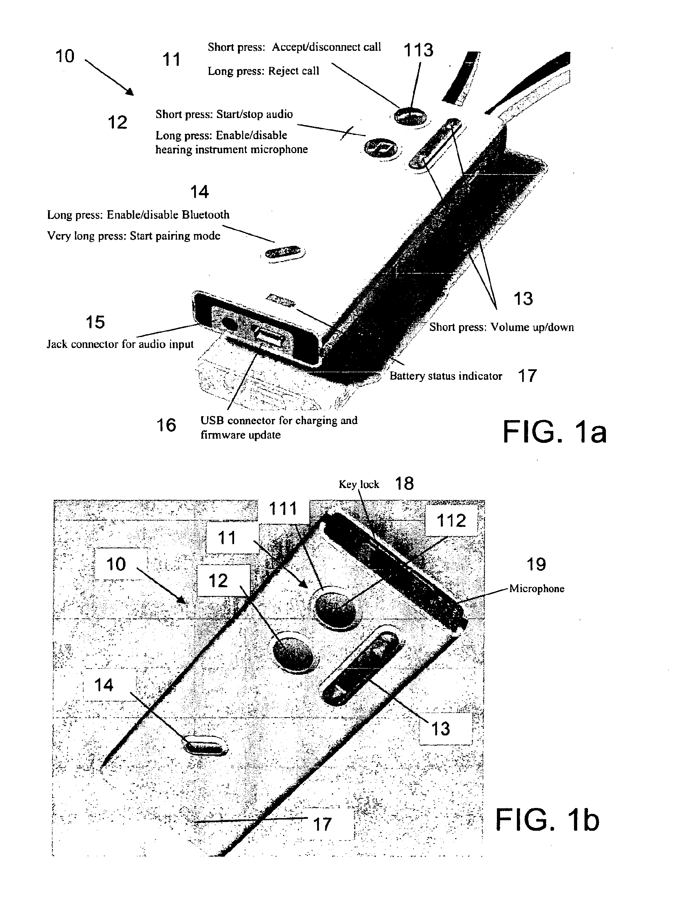

FIG. 1 shows different perspective views of an embodiment of a communications device according to the invention.

The figures are schematic and simplified for clarity, and they just show details which are essential to the understanding of the invention, while other details are left out. Throughout, the same reference numerals are used for identical or corresponding parts.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### MODE(S) FOR CARRYING OUT THE INVENTION

In the following an embodiment of a user interface for a communications device for communicating with a head-worn listening device, typically for audio streaming to a pair of hearing aids is described. The communications device is adapted for receiving a multitude of audio signals (including that of a mobile telephone) and for wirelessly transmitting at least one audio signal selected among the multitude of audio signals to the hearing aids. Devices having such functionality or similar functionality are e.g. described in EP 1 480 492 A2 or EP 1 460 769 A1 or WO 2006/117365 A1.

Streaming is e.g. performed at more than 16 kHz, such as at 20 kHz or more, e.g. encoded according to the CCITT G.722 standard. To allow the listening device to differentiate in the processing of the audio signals received from the communications device, e.g. between low- and high-bandwidth signals (e.g. phone and music), an audio identification field can be included in the status information exchanged between the communications device and the listening device. This allows the listening device to switch to a program optimized for the characteristics of the audio content.

In the present context, the term 'streaming' is taken to mean the (wired or wireless) forwarding at a certain bit rate of a digitally encoded signal (typically divided in data packets) comprising a specific 'content', such as an audio or video content (and possibly various control or messaging data), in the present application typically an audio content.

Fig. 1 shows different perspective views of an embodiment of a communications device according to the invention

The present embodiment of a communications device is adapted to receive and forward a telephone call from a mobile telephone to a hearing aid or a pair of hearing aids via a Bluetooth connection between the mobile phone and the communications device. Further, audio signals from other devices can be received and forwarded to the hearing aid(s), including other Bluetooth based signals (e.g. the sound from a TV, a DVD-player or a radio tuner, etc.) or a directly wired signal, here via the jack connector (15 in FIG. 1a) e.g. adapted to receive an audio signal from a music player, such as an iPOD™. In the present embodiment, BlueTooth is used as the wireless transmission standard between an audio source and the communications device. However, other standards could be used, e.g. DECT, IEEE 802.11, etc.

### 1. Buttons and connectors overview

The communications device comprises a number of functional push-buttons for influencing the selection and properties of the audio signals.

The communications device is adapted to provide that the commands activated by the push-buttons are defined in dependence of a push-time parameter and/or of the simultaneous activation of two or more push-buttons. A given push-button activation combination generates a mixture of audio-visual cues to indicate to a user which command is thereby activated. The individual push-buttons, indicators and connectors of the communications device is described in the following.

FIG. 1a shows the following user-interface features:

### Push-buttons:

- *Phone button* 11 for controlling and indicating events related to a phone call.
- *Audio button* 12 for controlling and indicating events related to audio transmissions other than a phone call.
- *Volume button* 13 for controlling the volume of the audio signal in the hearing aid(s).
- *Bluetooth button* 14 for controlling and indicating events related to the wireless connection to a mobile phone or other audio source.

### Indicator:

- Battery status indicator 17.

### Connectors:

- *Jack connector* 15 for audio input, wired input as an alternative to the wireless (BlueTooth) audio input, e.g. from a music player.
- *USB connector* 16 for battery charging and firmware update.

FIG. 1b shows the following user-interface features:

### Other:

- *Key lock* 18 for locking buttons of the communications device to avoid unintentional activation.
- *Microphone* 19 for recording a user's voice input in case of a telephone conversation.

### 2. Functional description

This section provides a detailed description of each function, including dependencies on a push-time parameter (here) selectable between 'short', 'long' or 'very long' push-times. The duration of the three button-press-categories of the present embodiment is defined as follows (but could of course be chosen differently in time and number):
Short: 0.1-0.8 seconds
Long: 0.8-2.5 seconds
Very long: > 4 seconds

A hearing aid system comprising the communications device of the present embodiment in cooperation with a pair of hearing aids communicating with the head set can act as a mono/stereo wireless (e.g. Bluetooth) headset that also accepts wired input. Examples of uses of such a system are:
- Wireless headset for mobile phone (e.g. Bluetooth headset)
- Headphones for TV viewing (e.g. Bluetooth headset or wired)
- Headphones for e.g. MP3/iPOD™ player (e.g. wired input)
- Headphones for Bluetooth stereo music player e.g. MP3 (e.g. Bluetooth stereo)
- Volume control for hearing instruments

Push-buttons as shown in the embodiment of FIG. 1 adapted for the various modes described herein can be of any appropriate type, preferably enabling, rim light and possibly back light of a symbol, letter or text identifying the function of the button.

### Audio streaming

When the hearing instruments are receiving audio from the communications device, all controls on the hearing instruments are locked. The volume in the hearing instruments can be adjusted on the communications device.

Audio streaming is one-way communication from the communications device to the hearing instruments i.e. the communications device has no information about the state of the hearing instruments. When audio streaming is stopped, the communications device instructs the hearing instruments to release controls and resume normal operation. If the hearing instruments for some reason do not receive the 'stop audio streaming' messages from the communications device, the hearing instruments must return to normal operation after a predefined timeout-time, e.g. 5 seconds.

In a preferred embodiment, the hearing instrument(s) will only accept audio streaming from the communications device to which they are linked.

| | | |
|---|---|---|
| **Phone button** | | |
| 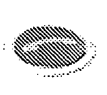 | Short press | When a connected phone is ringing, a short press will answer the call. The call is terminated again with a short press. |
| | | The communications device can receive an incoming call while streaming other content i.e. wired or Bluetooth. |
| | Long press | When a connected phone is ringing a long press will reject the incoming call. |

The phone button has no functionality when a call is not incoming or active.

| | | | |
|---|---|---|---|
| **Audio button** | | | |
| 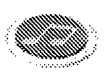 | Short press | A short press toggles audio streaming on/off. The audio source can be wired audio, Bluetooth according to the 'Bluetooth Headset' (HS) or 'Bluetooth Stereo' profile. Audio sources are prioritized by The communications device in this order: | |
| | | 1. | Wired audio |
| | | 2. | Bluetooth dongle Headset (TV) / Bluetooth Stereo |
| | | | |
| | | When no wired connection is present, the communications device will attempt to connect to the last connected Bluetooth dongle. This will take a few seconds and in that time the communications device will blink the audio button. | |
| | | | |
| | | Note that a phone call has priority over other audio | |
| | Long press | Turn microphone on/off in hearing instrument while streaming. | |
| | | | |
| | | Note that this will reset volume control to 0 | |

If more than one Bluetooth audio source is present, e.g. two Bluetooth Stereo devices, the communications device will connect to only one of them. In the present embodiment, it is not possible to switch between multiple Bluetooth sources [except by turning a device off or moving it out of range from the communications device]. Other embodiments may allow such selection among a number of BlueTooth sources whose addresses are prerecorded in the communications device or in the listening device, cf. e.g. EP 1 328 136.

| | | | |
|---|---|---|---|
| **Bluetooth Button** | | | |
| 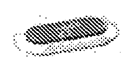 | Long press | This toggles Bluetooth on/off in the communications device. | |
| | | - | Bluetooth cannot be turned off during an active or incoming call |
| | | - | The first time the communications device is used a long press will activate pairing mode [it has no meaning to have Bluetooth on without any pairings]. |
| | | - | Bluetooth can be turned off during Bluetooth audio streaming |
| | Very long press | This activates Bluetooth pairing mode. Bluetooth must be off for the communications device to enter pairing mode. Pairing mode is active for 120 seconds and cannot be cancelled. | |
| | | | |
| | | Up to 8 devices can be paired at the same time (in the sense that a trusted relationship between two devices is established prior to the use of such devices). When the limit is reached the communications device starts overwriting the oldest pairings. The communications device is a mono/stereo headset and can be for example be paired to: | |
| | | • | Mobile phone (Bluetooth headset) |
| | | • | Mobile phone with music player (Bluetooth stereo) |
| | | • | Bluetooth TV dongle (Bluetooth headset) |
| | | • | Bluetooth stereo audio adapter |
| | | • | MP3 player with Bluetooth stereo |
| | | • | PC and PDA |
| | | • | GPS car navigation system with Bluetooth |

| | |
|---|---|
| **Special pairing functions:** | |
| 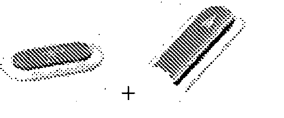 | A very long press on Bluetooth AND volume up button simultaneously will delete all pairings in the communications device (prerequisite: Bluetooth must be off). This is useful in refurbishing |

Switching off Bluetooth will significantly increase the battery life of the communications device.

| | |
|---|---|
| **Volume control** | |
| 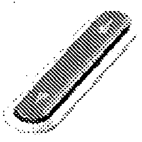 | Short press A short press turns volume up or down in the hearing instruments. Volume is changed in both hearing instruments. The volume control works in all input modes (wired and Bluetooth) and also when the communications device is not streaming audio. |
| | |
| | Volume can be turned 4 steps up and 8 steps down corresponding to 10 dB up (if sufficient reserve gain is present) and 20 dB down. |

### No audio streaming:

- When the communications device is not streaming audio, the range of operation is boosted ~30% from the communications device
- When the communications device is not streaming audio, the volume control works relative to the hearing instrument setting
- When not streaming the volume is binaurally synchronized in the HIs
- With only one HI, the volume control works like a 'local' VC - with two HIs, the volume control of the communications device operates both

### During streaming:

- The volume control is a master volume control, i.e. it affects the hearing instrument microphone as well as the communications device audio
- The communications device embeds an absolute volume offset in the audio stream - to ensure that the HIs stay synchronized (binaural synchronization is not possible during audio streaming)
- When leaving a program the volume is reset to default (e.g. when the communications device stops audio streaming, the hearing instruments return to default microphone program and default volume setting in that program)
- When enabling and disabling a HI microphone during streaming, volume returns to default
- Volume can only be turned up in the HI if there is reserve gain. If no reserve gain is present, there will be four 'dead' steps in the volume control

### Key lock:

When the key lock is activated, all other buttons are locked. An exception is in case of an incoming phone call, where the call can be accepted [even with key lock active] and all keys will be active until the call is terminated.

### Wired audio input:

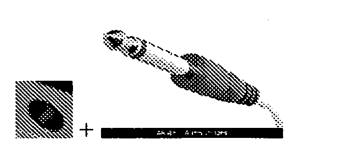

When a 2.5 mm jack is connected to the jack connector input of the communications device, it starts streaming after the audio button is pressed. The rim light (cf. e.g. rim 111 in FIG. 1b) around the audio button (cf. e.g. central push-button 112 in FIG. 1b) turns on constant light.
- If Bluetooth audio streaming is active when the jack is inserted, the Bluetooth audio is stopped and the wired content is streamed instead. When the jack is removed, Bluetooth audio does NOT automatically resume but must be activated with the audio button.
- If a phone call is active when the jack is inserted, the call is NOT terminated.
- When the jack is removed, the communications device stops audio streaming and the hearing instruments returns to standard program.
- If the audio button is pressed *without* a jack connected, streaming will not start.

### USB connector:

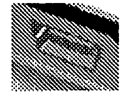

The communications device battery is charged via the USB connector. It can be connected to a PC for charging as well as to an adapter. See below for visual indication during charging and 'battery low'-status.

The communications device has full functionality while charging.

The communications device firmware can be updated via the USB connector when connected to a PC.

### Microphone:

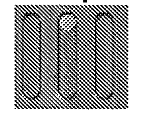

The microphone in the communications device is on only during an active phone call. In all other situations the microphone is turned off.

### Call waiting:

The communications device supports call waiting by sending a notification to the hearing instruments when a second call is incoming during an active call. The notification will be played as beeps in the instruments, cf. below. To switch to the second call the mobile phone must be operated.

### In-band ringing:

The communications device does not support in-band ringing. The ring tones of the communications device are always played by the hearing instruments. Note that in-band ringing will temporarily interrupt the audio streaming of the communications device. Similarly a mobile phone will interrupt audio streaming if the phone is configured to stream all audio over Bluetooth (e.g. button presses).

### Audible notification:

The audible notification is designed to notify the user of any events requiring user interaction. The audible commands are managed by the firmware of the communications device. Whenever an event requires an audible notification, the communications device should send a packet to request a sound playback. This packet includes a sound ID number to indicate which sound should be played.

The events requiring audible notification are:
- Telephony
   o Incoming call
   o Incoming SMS
- The communications device interactions
   o Bluetooth
      ■ Enabled
      ■ Disabled
      ■ Bluetooth connection lost

The notification signals could be stored in the HIs.

Each instance of a notification should be triggered individually to ensure that the HIs will not continue to ring if the communications device is out of range when the ringing is terminated.

The audible notifications can be embedded into an audio stream. The status message of the communications device carries a beep-field, which is used to specify the type of audible notification required, in the same manner as the beep packet does.

### During idle:

A major issue in this scenario is to ensure that both HIs starts ringing at the same time. Even small delays from HI to HI will cause undesirable echo effects. When the communications device is not streaming, the Ring command is sent in a continuous burst mode, similar to remote control.

### During streaming:

During streaming the communications device should change the beep section of the communications device status message to request the required beep. To ensure that the HIs start ringing at the same time the "start ringing" should only be requested at an interval which is longer than the ring tone itself.

### Stop ringing:

Whenever the user acknowledges an event causing the audible notification, the ringing should cease immediately, to confirm the user interaction. The stop ringing signal is used for this purpose.

When a Stop Ringing signal is received by the HIs, they should cease ringing even though they are in the middle of a melody. Ringing is not normally stopped by an audio stream. This is only the case when the beep field of the communications device status message is set to "cease beep".

### Audible feedback:

The audible feedback is quite similar to audible notification; however the feedback is initiated by a user interaction directly interacting with the HIs. This direct interaction allows the HIs firmware to manage the audible feedback, and thus no specific audible feedback packet is required as the information lies implicitly in the controls sent. The dependency on the command alone enables the HIs to choose a sound to play based on both the command, and the HIs current state, rather than be dependent on a command to play a specific sound. This for instance enables the HI to play a different sound when receiving a volume up command, depending on whether is at the upper limit, or operating normally.

These user interactions are:
- Program change
- Volume change
- Connection to hearing aid(s) lost

### Visual notification:

It is a general principle of the present user interface that the status of the communications device is communicated to the user visually with lights, while the status of the hearing instrument is communicated with audio signals played in the hearing instrument. Table 1 below provides an overview of the visual indications, i.e. the different light and blinking patterns, of the embodiment of a communications device according to the invention illustrated in FIG. 1 providing feedback to the user about the current state.

**Table 1. Visual indications versus events or state for buttons and indicators.**

| Light | State description | Prerequisites | Blinking |
|---|---|---|---|
| Phone 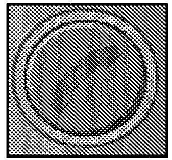 | Phone ringing | Streamer is paired and connected to mobile phone | Blinking 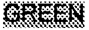 light |
| | Phone call accepted | Streamer is paired and connected to mobile phone | Constant 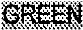 light |
| | No active calls | | No light |
| Audio 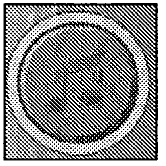 | Streaming is on | Connection is established to Bluetooth or wired connection is present | Constant 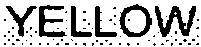 light |
| | Streaming is off | | No light |
| | Streaming is pending | Connecting to Bluetooth audio dongle (up to 30 seconds) | Slow flash 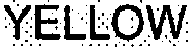 light until audio connection is established |
| Bluetooth 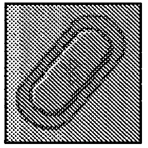 | Bluetooth is turned on | | Slow fading BLUE light |
| | Pairing | Pairing is activated | Fast BLUE blinking |
| | Bluetooth is turned off | | No light |
| | Button pushed | Key lock OFF | Constant BLUE light for 5 seconds |
| | After any button pushed | Key lock ON | 10 5 short blinks in 1 second |
| Backlight 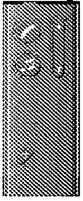 | After any button pushed Battery low | Key lock OFF | Backlight will light up for 10 seconds |
| | | ~20 minutes left | Constant 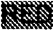 light. Audible notification sent to HI |
| Battery low 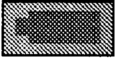 | Battery very low | ~5 minutes left | Blinking 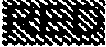 light. Audible notification sent to HI |
| | Battery near-dead | ~1 second left | Pressing button will turn on PhCStreamer shortly and blink 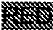 light 3 times |
| | Battery dead | 0 minutes left | No response |
| Battery charging 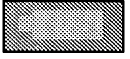 | Battery charging | USB cable connected to power source | Blinking 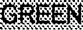 light 100 ms on/900 ms off |
| | Battery fully charged | USB cable connected to power source | Constant 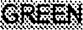 light |

The features audio-visual described above can e.g. be implemented in a combination of software and hardware and be located in the communications device.

The invention is defined by the features of the independent claim(s). Preferred embodiments are defined in the dependent claims. Any reference numerals in the claims are intended to be non-limiting for their scope.

Some preferred embodiments have been shown in the foregoing, but it should be stressed that the invention is not limited to these, but may be embodied in other ways within the subject-matter defined in the following claims.

### REFERENCES

EP 1 480 492 A2 (SIEMENS AUDIOLOGISCHE TECHNIK) 24-11-2004
EP 1 460 769 A1 (PHONAK) 22-09-2004
WO 2006/117365 A1 (OTICON) 09-11-2006
EP 1 328 136 (SIEMENS AUDIOLOGISCHE TECHNIK) 16-07-2003
US 2007/0009123 (Aschoff et al.) 11-01-2007

## Claims

1. A body worn communications device (10) for communicating with a head-worn listening device, the communications device being adapted for receiving a multitude of audio signals and for transmitting at least one audio signal selected among the multitude of audio signals to the listening device, the communications device comprising a number of functional push-buttons (11, 12, 13, 14) for influencing the selection and properties of said audio signals, the communications device comprising a user interface comprising a number of functional push-buttons for influencing a state of the user interface, such as the selection (and de-selection) of an audio signal, events and properties related to said audio signal, and wherein the state of the user interface is indicated at the same button where the state can be influenced in that the state of the communications device is communicated visually with lights in (112) or around (111) said push-buttons, **characterized in that** the communications device (10) is adapted to provide one or more tactile cues to indicate commands, status or events in said communications device or in said listening device.

2. A body worn communications device according to claim 1 adapted to indicate events relating to said received audio signals to a user by a mixture of audio-visual cues, at least partially via one or more of said push-buttons, in that the status of the listening device is communicated with audio signals played in the listening device.

3. A body worn communications device according to claim 1 or 2 wherein the communications device is adapted to provide that the commands activated by said push-buttons are defined in dependence of a push-time parameter and/or of the simultaneous activation of two or more push-buttons.

4. A body worn communications device according to any one of claims 1-3 wherein *visual* cues for a given button are selected from the group comprising a symbol (113) on the button, button rim lights, back light, different colour light, constant light, no light, blinking light at a first blinking frequency, blinking light at a second blinking frequency, and combinations thereof.

5. A body worn communications device according to any one of claims 1-4 wherein *audio* cues for a given button and/or event are selected from the group comprising ring-tones, clicks, single beep-sounds, a relatively short beep, a relatively long beep, a number of repeated beep-sounds at a first repeat frequency, a number of repeated beep-sounds at a second repeat frequency, and combinations thereof.

6. A body worn communications device according to any one of claims 1-5 wherein the status of the communications device is communicated visually with lights, while the status of the listening device is communicated with audio signals played in the listening device.

7. A body worn communications device according to any one of claims 1-6 comprising a phone button (11) for initiating commands and displaying events relating to the audio signal from a telephone and an audio button (12) for initiating commands and displaying events relating to another audio signal.

8. A body worn communications device according to any one of claims 1-7 further comprising a microphone (19) for recording a user's voice input.

9. A body worn communications device according to any one of claims 1-8 further comprising a volume control button (13) for regulating the volume of the audio signal presented to the listening device.

10. A body worn communications device according to any one of claims 1-9 comprising a wireless audio input interface, e.g. according to the BlueTooth standard or another standard for digital wireless communication.

11. A body worn communications device according to claims 10 comprising a wireless communications button (14), e.g. a BlueTooth button, for activating or de-activating the wireless communications interface.

12. A body worn communications device according to any one of claims 1-11 further comprising a wired audio input (15), such as a jack connector or a USB-connector.

13. A body worn communications device according to any one of claims 1-12 further comprising a connector (16) for charging the battery of the communications device and/or for updating the firmware of the communications device, e.g. a USB-connector.

14. A body worn communications device according to any one of claims 1-13 comprising four push buttons, a phone button (11), an audio button (12), a volume button (13) and a wireless connection button (14).

15. A body worn communications device according to any one of claims 1-14 further comprising a battery status indicator (17).

16. A hearing aid system comprising a communications device (10) according to any one of claims 1-15 and a listening device wherein the listening device and the communications device are adapted to communicate wirelessly with each other.

17. A hearing aid system according to claim 16 wherein the listening device and the communications device are adapted to communicate inductively with each other.

18. A hearing aid system according to claim 16 or 17 wherein the communication between the listening device and the communications device is arranged according to a communications standard, such as CCITT G.722.

19. A hearing aid system according to any one of claims 16-18 wherein the sampling rate of the audio signal is larger than 16 kHz, such as 20 kHz or larger.

20. A hearing aid system according to any one of claims 16-19 adapted to allow the listening device to differentiate in the processing of the audio signals received from the communications device, such as between low- and high-bandwidth signals (e.g. phone and music).

21. A hearing aid system according to claim 20 wherein the system is adapted to exchange status information between the communications device and the listening device and wherein an audio identification field is included in said status information.

22. A hearing aid system according to any one of claims 16-21 wherein the listening device comprises a hearing aid or a pair of hearing aids, a head set or a pair of head phones.

23. A method of indicating to a user the commands activated by push-buttons of a body worn communications device for communicating with a head-worn listening device, and the status of the communications device or of the listening device, the communications device being adapted for receiving a multitude of audio signals and for transmitting at least one audio signal selected among the multitude of audio signals to the listening device, the communications device comprising a number of functional push-buttons for influencing the selection and properties of said audio signals, the method comprising indicating to a wearer of the communications device a state, including commands, status and events, relating to said audio signal(s) received by the listening device or influenced by the wearer at the same button where the state can be influenced, in that the state of the communications device is communicated visually with lights in or around said push-buttons, **characterized in that** indications of commands or status in said communications device or in said listening device by one or more tactile cues are provided.

24. A method according to claim 23 comprising indicating said commands and status relating to said audio signal(s) received by said communications device or said listening device to a wearer of said listening device by a *mixture* of audio-visual cues wherein the commands and status of the communications device is communicated visually with lights in or around said push-buttons, while the status of the listening device is communicated with audio signals played in the listening device.

25. A method according to claims 23 or 24 wherein *visual* cues for a given button or status indicator are selected from the group comprising a symbol on the button, button rim lights, back light, different colour light, constant light, no light, blinking light at a first blinking frequency, blinking light at a second blinking frequency, and combinations thereof.

26. A method according to any one of claims 23-25 wherein *audio* cues for a given button or event are selected from the group comprising ring-tones, clicks, single beep-sounds, a relatively short beep, a relatively long beep, a number of repeated beep-sounds at a first repeat frequency, a number of repeated beep-sounds at a second repeat frequency, and combinations thereof.

27. Use of a communications device according to any one of claims 1-15 or of a hearing aid system according to any one of claims 16-22.

## Patentansprüche

1. Körpergetragene Kommunikationsvorrichtung (10) zum Kommunizieren mit einer kopfgetragenen Hörvorrichtung, wobei die Kommunikationsvorrichtung zum Empfangen einer Mehrzahl von Audiosignalen und zum Übertragen von wenigstens einem Audiosignal, welches aus der Mehrzahl von Audiosignalen ausgewählt ist, an die Hörvorrichtung ausgebildet ist, und wobei die Kommunikationsvorrichtung umfasst
- eine Anzahl von funktionalen Druckknöpfen (11, 12, 13, 14) zum Beeinflussen der Auswahl und von Eigenschaften der Audiosignale, und
- eine Benutzerschnittstelle mit einer Anzahl von funktionalen Druckknöpfen zum Beeinflussen eines Zustandes der Benutzerschnittstelle, wie die Auswahl (und Abwahl) eines Audiosignals, von Ereignissen und von Eigenschaften betreffend das Audiosignal, wobei der Zustand der Benutzerschnittstelle an demselben Knopf angezeigt wird, mit dem der Zustand beeinflusst werden kann, und zwar **dadurch**, dass der Zustand der Kommunikationsvorrichtung visuell mit Lichtern, die in (112) den Druckknöpfen oder um diese herum (111) angeordnet sind, vermittelt wird,
**dadurch gekennzeichnet, dass**
- die Kommunikationsvorrichtung (10) zum Bereitstellen eines oder mehrerer taktiler Signale ausgebildet ist, um Befehle, Zustände oder Ereignisse in der Kommunikationsvorrichtung oder in der Hörvorrichtung anzuzeigen.

2. Körpergetragene Kommunikationsvorrichtung nach Anspruch 1, die ausgebildet ist, einem Nutzer Ereignisse betreffend die empfangenen Audiosignale mittels einer Zusammensetzung von audiovisuellen Signalen, wenigstens zum Teil über einen oder mehrere Druckknöpfe anzuzeigen, **dadurch**, dass der Zustand der Hörvorrichtung mit in der Hörvorrichtung wiedergegebenen Audiosignalen vermittelt wird.

3. Körpergetragene Kommunikationsvorrichtung nach Anspruch 1 oder 2, wobei die Kommunikationsvorrichtung ausgebildet ist, sicherzustellen, dass die durch die Druckknöpfe aktivierten Befehle in Abhängigkeit eines Haltezeitparameters und/oder in Abhängigkeit einer gleichzeitigen Aktivierung von zwei oder mehreren Druckknöpfen definiert sind.

4. Körpergetragene Kommunikationsvorrichtung nach einem der Ansprüche 1 bis 3, wobei visuelle Signale für einen gegebenen Knopf aus einer Gruppe ausgewählt werden, die folgendes umfasst: ein Symbol (113) auf dem Knopf, Knopfrandlichter, ein Rücklicht, ein Mehrfarbenlicht, ein Konstantlicht, kein Licht, ein Blinklicht mit einer ersten Blinkfrequenz, ein Blinklicht mit einer zweiten Blinkfrequenz, und Kombinationen davon.

5. Körpergetragene Kommunikationsvorrichtung nach einem der Ansprüche 1 bis 4, wobei Audiosignale für einen gegebenen Knopf oder ein Ereignis aus einer Gruppe ausgewählt werden, die folgendes umfasst: Klingeltöne, Klicktöne, Einzelsummersignale, ein vergleichsweise kurzes Summersignal, ein vergleichsweise langes Summersignal, eine Anzahl von Summersignalen, die mit einer ersten Wiederholungsfrequenz wiederholt werden, eine Anzahl von Summersignalen, die mit einer zweiten Wiederholungsfrequenz wiederholt werden, und Kombinationen davon.

6. Körpergetragene Kommunikationsvorrichtung nach einem der Ansprüche 1 bis 5, wobei der Zustand der Kommunikationsvorrichtung visuell mit Lichtern vermittelt wird, während der Status der Hörvorrichtung mit in der Hörvorrichtung wiedergegebenen Audiosignalen vermittelt wird.

7. Körpergetragene Kommunikationsvorrichtung nach einem der Ansprüche 1 bis 6, umfassend einen Telefonknopf (11) zum Auslösen von Befehlen und zum Anzeigen von Ereignissen betreffend das Audiosignal eines Telefons und umfassend einen Audioknopf (12) zum Auslösen von Befehlen und zum Anzeigen von Ereignissen betreffend ein anderes Audiosignal.

8. Körpergetragene Kommunikationsvorrichtung nach einem der Ansprüche 1 bis 7, weiter umfassend ein Mikrofon (19) zum Aufzeichnen eines Nutzerstimmeneingangssignals.

9. Körpergetragene Kommunikationsvorrichtung nach einem der Ansprüche 1 bis 8, weiter umfassend einen Lautstärkeregulierungsknopf (13) zum Regulieren der Lautstärke der in der Hörvorrichtung wiedergegebenen Audiosignale.

10. Körpergetragene Kommunikationsvorrichtung nach einem der Ansprüche 1 bis 9, umfassend eine Schnittstelle für drahtlose Audioeingangssignale, zum Beispiel gemäß dem Bluetooth-Standard oder gemäß einem anderen Standard für digitale drahtlose Kommunikation.

11. Körpergetragene Kommunikationsvorrichtung nach Anspruch 10, umfassend einen Drahtlose-Kommunikation-Knopf (14), zum Beispiel einen Bluetooth-Knopf, zum Aktivieren oder Deaktivieren der Schnittstelle für drahtlose Kommunikation.

12. Körpergetragene Kommunikationsvorrichtung nach einem der Ansprüche 1 bis 11, weiter umfassend einen drahtgebundenen Audioeingang (15), wie einen Steckanschluss oder einen USB-Anschluss.

13. Körpergetragene Kommunikationsvorrichtung nach einem der Ansprüche 1 bis 12, weiter umfassend einen Anschluss (16) zum Laden der Batterie der Kommunikationsvorrichtung und/oder zum Aktualisieren der Firmware der Kommunikationsvorrichtung, zum Beispiel einen USB-Anschluss.

14. Körpergetragene Kommunikationsvorrichtung nach einem der Ansprüche 1 bis 13, umfassend vier Druckknöpfe, einen Telefonknopf (11), einen Audioknopf (12), einen Lautstärkeknopf (13) und einen Drahtlose-Verbindung-Knopf (14).

15. Körpergetragene Kommunikationsvorrichtung nach einem der Ansprüche 1 bis 14, weiter umfassend eine Batteriestatusanzeige (17).

16. Hörhilfesystem umfassend eine Kommunikationsvorrichtung (10) nach einem der Ansprüche 1 bis 15 und eine Hörvorrichtung, wobei die Hörvorrichtung und die Kommunikationsvorrichtung ausgebildet sind, drahtlos miteinander zu kommunizieren.

17. Hörhilfesystem nach Anspruch 16, wobei die Hörvorrichtung und die Kommunikationsvorrichtung ausgebildet sind, induktiv miteinander zu kommunizieren.

18. Hörhilfesystem nach Anspruch 16 oder 17, wobei die Kommunikation zwischen der Hörvorrichtung und der Kommunikationsvorrichtung gemäß einem Kommunikationsstandard, wie dem CCITT G. 722, organisiert ist.

19. Hörhilfesystem nach einem der Ansprüche 16 bis 18, wobei die Abtastrate des Audiosignals größer als 16 kHz, wie 20 kHz oder größer, ist.

20. Hörhilfesystem nach einem der Ansprüche 16 bis 19, das ausgebildet ist, derart zu operieren, dass die Hörvorrichtung beim Verarbeiten der von der Kommunikationsvorrichtung empfangenen Audiosignale differenzieren kann, beispielsweise zwischen Signalen niedriger Bandbreite und Signalen hoher Bandbreiten (z. B. Telefon und Musik).

21. Hörhilfesystem nach Anspruch 20, wobei das System ausgebildet ist, Zustandsinformation zwischen der Kommunikationsvorrichtung und der Hörvorrichtung auszutauschen, wobei die Zustandsinformation ein Audioidentifikationsfeld beinhaltet.

22. Hörhilfesystem nach einem der Ansprüche 16 bis 21, wobei die Hörvorrichtung ein Hörgerät oder ein Paar von Hörgeräten, ein Headset oder ein Paar von Kopfhörern umfasst.

23. Verfahren zum Anzeigen von Befehlen, die durch Druckknöpfe einer körpergetragenen Kommunikationsvorrichtung zum Kommunizieren mit einer kopfgetragenen Hörvorrichtung aktiviert worden sind, und zum Anzeigen eines Zustandes der Kommunikationsvorrichtung oder der Hörvorrichtung für einen Nutzer, wobei die Kommunikationsvorrichtung zum Empfangen einer Mehrzahl von Audiosignalen und zum Übertragen von wenigstens einem Audiosignal, welches aus der Mehrzahl von Audiosignalen ausgewählt ist, an die Hörvorrichtung ausgebildet ist, und wobei die Kommunikationsvorrichtung eine Anzahl von funktionalen Druckknöpfen zum Beeinflussen der Auswahl und von Eigenschaften der Audiosignale umfasst, und wobei das Verfahren umfasst:
- Anzeigen eines Zustandes für den Träger der Kommunikationsvorrichtung, einschließlich Befehle, Zustände und Ereignisse betreffend das/die Audiosignale, die von der Hörvorrichtung empfangen worden sind oder die vom Träger mit demselben Knopf beeinflusst worden sind, mit dem der Zustand der Kommunikationsvorrichtung visuell mit Lichtern, die in den Druckknöpfen oder um diese herum angeordnet sind, vermittelt wird,
**dadurch gekennzeichnet, dass**
- das Anzeigen von Befehlen oder von Zuständen in der Kommunikationsvorrichtung oder in der Hörvorrichtung durch Ausgeben eines oder mehrerer taktiler Signale realisiert wird.

24. Verfahren nach Anspruch 23, umfassend Anzeigen von Befehlen und Zuständen betreffend das/die Audiosignale, die von der Kommunikationsvorrichtung empfangen worden sind, oder die Hörvorrichtung für den Träger der Hörvorrichtung, und zwar durch eine Zusammensetzung von audiovisuellen Signalen, wobei die Befehle und Zustände der Kommunikationsvorrichtung visuell mit Lichtern, die in den Druckknöpfen oder um diese herum angeordnet sind, vermittelt werden, während der Status der Hörvorrichtung mit in der Hörvorrichtung wiedergegebenen Audiosignalen vermittelt wird.

25. Verfahren nach Anspruch 23 oder 24, wobei visuelle Signale für einen gegebenen Knopf oder eine Statusanzeige aus einer Gruppe ausgewählt werden, die folgendes umfasst: ein Symbol (113) auf dem Knopf, Knopfrandlichter, ein Rücklicht, ein Mehrfarbenlicht, ein Konstantlicht, kein Licht, ein Blinklicht mit einer ersten Blinkfrequenz, ein Blinklicht mit einer zweiten Blinkfrequenz, und Kombinationen davon.

26. Verfahren nach einem der Ansprüche 23 bis 25, wobei Audiosignale für einen gegebenen Knopf oder ein Ereignis aus einer Gruppe ausgewählt werden, die folgendes umfasst: Klingeltöne, Klicktöne, Einzelsummersignale, ein vergleichsweise kurzes Summersignal, ein vergleichsweise langes Summersignal, eine Anzahl von Summersignalen, die mit einer ersten Wiederholungsfrequenz wiederholt werden, eine Anzahl von Summersignalen, die mit einer zweiten Wiederholungsfrequenz wiederholt werden, und Kombinationen davon.

27. Verwendung einer Kommunikationsvorrichtung nach einem der Ansprüche 1 bis 15 oder eines Hörhilfesystems nach einem der Ansprüche 16 bis 22.

## Revendications

1. Dispositif de communication porté sur le corps (10) pour communiquer avec un dispositif d'écoute porté sur la tête, le dispositif de communication étant adapté pour recevoir une multitude de signaux audio et pour transmettre au dispositif d'écoute au moins un signal audio sélectionné parmi la multitude de signaux audio, le dispositif de communication comprenant un certain nombre de boutons-poussoirs fonctionnels (11, 12, 13, 14) pour influencer la sélection et certaines propriétés desdits signaux audio, le dispositif de communication comprenant une interface utilisateur comprenant un certain nombre de boutons-poussoirs fonctionnels pour influencer un état de l'interface utilisateur, tel que la sélection (ou la désélection) d'un signal audio, des événements et des propriétés relatifs audit signal audio, l'état de l'interface utilisateur étant indiqué au niveau du même bouton que celui par lequel l'état peut être influencé, en ce que l'état du dispositif de communication est communiqué visuellement par des lumières à l'intérieur (112) ou autour (111) desdits boutons-poussoirs, **caractérisé en ce que** le dispositif de communication (10) est adapté pour fournir un ou plusieurs indicateurs tactiles pour indiquer des commandes, statuts ou événements dans ledit dispositif de communication ou dans ledit dispositif d'écoute.

2. Dispositif de communication porté sur le corps selon la revendication 1, adapté pour indiquer à un utilisateur des événements relatifs audits signaux audio reçus, au moyen d'un mélange d'indicateurs audio-visuels, au moins partiellement par l'intermédiaire d'un ou plusieurs desdits boutons-poussoirs, en ce que le statut du dispositif d'écoute est communiqué par des signaux audio joués dans ledit dispositif d'écoute.

3. Dispositif de communication porté sur le corps selon la revendication 1 ou 2, dans lequel le dispositif de communication est adapté pour que les commandes activées par lesdits boutons-poussoirs puissent être définies en fonction d'un paramètre de durée d'appui et/ou de l'activation simultanée de deux ou plusieurs boutons-poussoirs.

4. Dispositif de communication porté sur le corps selon l'une quelconque des revendications 1 à 3, dans lequel des indicateurs *visuels* pour un bouton donné sont choisis dans le groupe comprenant un symbole (113) sur le bouton, un éclairage des bords du bouton, un rétro-éclairage, un éclairage selon différentes couleurs, un éclairage constant, aucun éclairage, un éclairage clignotant à une première fréquence de clignotement, un éclairage clignotant à une deuxième fréquence de clignotement, et des combinaisons de ces indicateurs.

5. Dispositif de communication porté sur le corps selon l'une quelconque des revendications 1 à 4, dans lequel des indicateurs *audio* pour un bouton et/ou un événement donné sont choisis dans le groupe comprenant des sonneries de téléphone, des clics, des bips sonores uniques, un bip relativement court, un bip relativement long, un certain nombre de bits sonores répétés à une première fréquence de répétition, un certain nombre de bits sonores répétés à une deuxième fréquence de répétition, et des combinaisons de ces indicateurs.

6. Dispositif de communication porté sur le corps selon l'une quelconque des revendications 1 à 5, dans lequel le statut du dispositif de communication est communiqué visuellement par des lumières, tandis que le statut du dispositif d'écoute est communiqué par des signaux audio joués dans le dispositif d'écoute.

7. Dispositif de communication porté sur le corps selon l'une quelconque des revendications 1 à 6, comprenant un bouton Téléphone (11) pour lancer des commandes et afficher des événements relatifs au signal audio provenant d'un téléphone et un bouton Audio (12) pour lancer des commandes et afficher des événements relatifs à un autre signal audio.

8. Dispositif de communication porté sur le corps selon l'une quelconque des revendications 1 à 7, comprenant en outre un microphone (19) pour enregistrer une entrée vocale d'un utilisateur.

9. Dispositif de communication porté sur le corps selon l'une quelconque des revendications 1 à 8, comprenant en outre un bouton Contrôle de volume (13) pour régler le volume du signal audio présenté au dispositif d'écoute.

10. Dispositif de communication porté sur le corps selon l'une quelconque des revendications 1 à 9, comprenant une interface d'entrée audio sans fil, par exemple selon la norme BlueTooth ou une autre norme pour les communications numériques sans fil.

11. Dispositif de communication porté sur le corps selon la revendication 10, comprenant un bouton Communications sans fil (14), par exemple un bouton BlueTooth, pour activer ou désactiver l'interface de communication sans fil.

12. Dispositif de communication porté sur le corps selon l'une quelconque des revendications 1 à 11, comprenant en outre une entrée audio filaire (15), telle qu'un connecteur Jack ou un connecteur USB.

13. Dispositif de communication porté sur le corps selon l'une quelconque des revendications 1 à 12, comprenant en outre un connecteur (16) pour le chargement de la batterie du dispositif de communication et/ou pour la mise à jour du micrologiciel du dispositif de communication, par exemple un connecteur USB.

14. Dispositif de communication porté sur le corps selon l'une quelconque des revendications 1 à 13, comprenant quatre boutons-poussoirs, un bouton Téléphone (11), un bouton Audio (12), un bouton Volume (13) et un bouton Connexions sans fil (14).

15. Dispositif de communication porté sur le corps selon l'une quelconque des revendications 1 à 14, comprenant en outre un indicateur de statut de batterie (17).

16. Système d'aide auditive comprenant un dispositif de communication (10) selon l'une quelconque des revendications 1 à 15 et un dispositif d'écoute, dans lequel le dispositif d'écoute et le dispositif de communication sont adaptés pour communiquer sans fil entre eux.

17. Système d'aide auditive selon la revendication 16, dans lequel le dispositif d'écoute et le dispositif de communication sont adaptés pour communiquer entre eux de façon inductive.

18. Système d'aide auditive selon la revendication 16 ou 17, dans lequel la communication entre le dispositif d'écoute et le dispositif de communication est établie selon une norme de communication, telle que la norme CCITT G.722.

19. Système d'aide auditive selon l'une quelconque des revendications 16 à 18, dans lequel le taux d'échantillonnage du signal audio est supérieur à 16 kHz, par exemple 20 kHz ou plus.

20. Système d'aide auditive selon l'une quelconque des revendications 16 à 19, adapté pour permettre au dispositif d'écoute de réaliser un traitement différentié des signaux audio reçus du dispositif de communication, par exemple selon que les signaux sont à faible bande passante ou à bande passante élevée (par exemple, téléphone et musique).

21. Système d'aide auditive selon la revendication 20, dans lequel le système est adapté pour que des informations de statut soient échangées entre le dispositif de communication et le dispositif d'écoute, et dans lequel un champ d'identification audio est inclus dans lesdites informations de statut.

22. Système d'aide auditive selon l'une quelconque des revendications 16 à 21, dans lequel le dispositif d'écoute comprend une aide auditive ou une paire d'aides auditives, un casque téléphonique ou une paire d'oreillettes.

23. Procédé d'indication à un utilisateur des commandes activées par des boutons-poussoirs d'un dispositif de communication porté sur le corps, pour communiquer avec un dispositif d'écoute porté sur la tête, et le statut du dispositif de communication ou du dispositif d'écoute, le dispositif de communication étant adapté pour recevoir une multitude de signaux audio et pour transmettre au dispositif d'écoute au moins un signal audio sélectionné parmi la multitude de signaux audio, le dispositif de communication comprenant un certain nombre de boutons-poussoirs fonctionnels pour influencer la sélection et certaines propriétés desdits signaux audio, le procédé comprenant l'indication à un porteur du dispositif de communication d'un état, comprenant des commandes, statuts et événements, relatifs audit ou audits signaux audio reçus par le dispositif d'écoute, ou influencés par le porteur au niveau du même bouton que celui par lequel l'état peut être influencé, en ce que l'état du dispositif de communication est communiqué visuellement par des lumières à l'intérieur ou autour desdits boutons-poussoirs, **caractérisé en ce que** des indications de commandes ou de statuts dans ledit dispositif de communication ou dans ledit dispositif d'écoute sont fournies par un ou plusieurs indicateurs tactiles.

24. Procédé selon la revendication 23, comprenant l'indication desdites commandes et statuts relatifs audit ou audits signaux audio reçus par ledit dispositif de communication ou ledit dispositif d'écoute à un porteur dudit dispositif d'écoute au moyen d'un *mélange* d'indicateurs audio-visuels, où les commandes et le statut du dispositif de communication sont communiqués visuellement par des lumières à l'intérieur ou autour desdits boutons-poussoirs, tandis que le statut du dispositif d'écoute est communiqué par des signaux audio joués dans le dispositif d'écoute.

25. Procédé selon la revendication 23 ou 24, dans lequel les indicateurs *visuels* pour un bouton ou un indicateur de statut donné sont choisis dans le groupe comprenant un symbole sur le bouton, un éclairage des bords du bouton, un rétro-éclairage, un éclairage selon différentes couleurs, un éclairage constant, aucun éclairage, un éclairage clignotant à une première fréquence de clignotement, un éclairage clignotant à une deuxième fréquence de clignotement, et des combinaisons de ces indicateurs.

26. Procédé selon l'une quelconque des revendications 23 à 25, dans lequel les indicateurs *audio* pour un bouton ou un événement donné sont choisis dans le groupe comprenant des sonneries de téléphone, des clics, des bips sonores uniques, un bip relativement court, un bip relativement long, un certain nombre de bits sonores répétés à une première fréquence de répétition, un certain nombre de bits sonores répétés à une deuxième fréquence de répétition, et des combinaisons de ces indicateurs.

27. Utilisation d'un dispositif de communication selon l'une quelconque des revendications 1 à 15 ou d'un système d'aide auditive selon l'une quelconque des revendications 16 à 22.
